(19) Europäisches Patentamt

European Patent Office

Office européen des brevets

(11) **EP 0 934 914 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.[7]: **C04B 24/18**, C04B 22/08

(21) Anmeldenummer: **98101361.8**

(22) Anmeldetag: **27.01.1998**

(54) **Mittel zur Reduzierung von Chrom (VI)-Ionen in Zement**

Agent for the reduction of chromium(VI) ions in cement

Agent de réduction pour des ions de chrome(VI) contenus dans du ciment

(84) Benannte Vertragsstaaten:
**BE CH DE DK ES FR GB IT LI NL SE**

(43) Veröffentlichungstag der Anmeldung:
**11.08.1999 Patentblatt 1999/32**

(73) Patentinhaber: **Chemische Werke Zell-Wildshausen GMBH D-40549 Düsseldorf (DE)**

(72) Erfinder:
• **Born, Gerhard 47800 Krefeld (DE)**
• **Brandt, Buckhardt 33106 Paderborn (DE)**

• **Krumbiegel, Andreas, Dr. rer. nat. 68169 Mannheim (DE)**

(74) Vertreter: **Meyer-Roedern, Giso, Dr. Bergheimer Strasse 10-12 69115 Heidelberg (DE)**

(56) Entgegenhaltungen:
**EP-A- 0 630 869      WO-A-94/20419**

• **DATABASE WPI Section Ch, Week 9142 Derwent Publications Ltd., London, GB; Class L02, AN 91-306895 XP002069239 & JP 03 205 331 A (HATANO O)**

**Beschreibung**

Die 6-wertigen Chrom-Verbindungen, z. B. Chrom (VI)-Oxid, sind giftig und wirken als starke Oxidationsmittel ätzend auf Haut und Schleimhäute. Es gibt Chromat-Allergien, z. B. das bekannte Maurerekzem.

Es gibt nach dem Stand der Technik bereits Systeme, die die wasserlöslichen Verbindungen des Chrom (VI) in der Zementmatrix reduzieren sollen. Im wesentlichen basieren sie auf den reduzierenden Eigenschaften eines Kations aus den Nebengruppenelementen. Besonders hervorgehoben wurde die reduzierende Wirkung von Eisen (11)-Ionen.

Allerdings ist zu beobachten, daß Chrom (VI) nur sehr schwer in einer stark alkalischen Lösung zu reduzieren ist. So steigt nach längerer Verweilzeit die Konzentration der Chrom (VI)-Ionen wieder an. Ähnliche Effekte werden auch bei anderen Systemen beobachtet. Die eigentlichen Schwierigkeiten der Reduktion von Cr (VI)-Ionen sind folgende.

Das Redoxverhalten von Chromaten:
Die charakteristische Eigenschaft der Chromate ist ihre stark oxidierende Wirkung, da sie das große Bestreben haben, bei Zugabe oxidierbarer Stoff in die Stufe des dreiwertigen Chroms überzugehen:

$$CrO_4^{2-} + 8\,H^+ + 3\,e^- \Leftrightarrow Cr^{3+} + 4\,H_2O$$

$$Cr_2O_7^{2-} + 14H^+ + 6\,e^- \Leftrightarrow 2Cr^{3+} + 7H_2O$$

Die Oxidationswirkung ist in saurer Lösung besonders hoch und nimmt mit zunehmender Basizität sehr stark ab. Hieraus ergibt sich die Problematik der Wirksamkeit der Agenzien, die zur Chrom (VI)-Reduktion in der Zementmatrix eingesetzt werden können.

An einem Beispiel soll gezeigt werden, weshalb mit Eisen (II)-Ionen keine dauerhafte und hinreichende Chromatreduktion bewirkt werden kann:

1.) Gleichgewichtsreaktion:

$$Fe^{2+} \Leftrightarrow Fe^{2+} + e^-$$

Das beschriebene Gleichgewicht stellt ein Elektron zur Verfügung, was zur Reduktion des Chrom (VI) zu Chrom (III) benutzt wird.

2.) Andererseits besteht zwischen Chrom (III) und Chrom (VI) folgendes Gleichgewicht:

$$2\,Cr^{3+} + 7\,H_2O \Leftrightarrow Cr_2O_7^{2-} + 14H^+ + 6\,e^-$$

Chrom (III)-Ionen sind sehr beständig gegen Oxidation und Reduktion in saurer Lösung, aber mit steigender Basizität nimmt diese Beständigkeit ab. Dies gilt besonders in der Zementmatrix Das bedeutet, daß auf Grund des Gleichgewichtes eine langsame Oxidation des Chrom (III) zu Chrom (VI) unter gleichzeitiger Reduktion des Eisen (III) zu Eisen (II) eintritt. Deshalb ist es mit diesem System nicht möglich, bestimmte Chromatgehalte, wie die vom Gesetzgeber vorgeschriebenen 2 ppm, zu unterschreiten.

Als andere Möglichkeit zur Chromatreduzierung besitzen organische Systeme, wie z. B. Aldehyde, bestimmte heterocyclische Verbindungen. So wird etwa Chrom (VI) von Menthol zu Chrom (III) reduziert. Wirksamer ist Pyridin. Diese Substanzen können aber aus vielen Gründen nicht eingesetzt werden. Diese liegen in der Einsatzmenge, der geringen Stabilität in der Zementmatrix und toxikologischen und ökonomischen Sachverhalten.

Es wurden Überlegungen angestellt, Ligninsulfonate aus dem Zellstoffprozeß, die einerseits als Komplexbildner für Kationen, z. B. $Fe^{2+}$, dienen und andererseits aldehydische Gruppen unterschiedlichster Genese sowie Heterocyclen enthalten, als Chromatreduzierer einzusetzen.

Leider wurde festgestellt, daß Ligninsulfonate aus dem Zellstoffprozeß diese Anforderung nicht hinreichend erfüllen können, d.h., daß ihre Wirksamkeit nicht groß genug ist, um den geforderten Wert von 2 ppm Chrom (VI) zu erreichen. Der Grund hierfür liegt im Aufbau der bezeichneten Ligninsulfonate. Ligninsulfonate nach dem Zellstoffprozeß stellen ein unregelmäßiges zufälliges dreidimensionales Netzwerk dar. Hieraus resultiert, daß rein zufällig mal mehr und mal weniger aktive Gruppen an der Oberfläche des Ligninsystems vorhanden sind. Deshalb ist der Faktor, um den die Chromationen reduziert werden, nie konstant und auch in der Gesamtsumme nicht ausreichend.

Werden Ligninsulfonate aus dem Zellstoffprozeß aber durch ein elektrochemisches Verfahren behandelt, wie es aus dem deutschen Patent P 43 06 260.1-09 und dem europäischen Patent Nr. 0 687 247 (Anmeldenummer 94 90 82 58.0-2104) bekannt ist, so erhält man reproduzierbare, für diese Anwendung zugeschnittene Lignosulfosäuren (LSS). Zur Chromatreduzierung werden Lignosulfosäuren mit einer mittleren Molekularmassenverteilung von 1.000 bis 25.000 hergestellt. Die Lignosulfosäure ist so beschaffen, daß sich an der Oberfläche des Makromoleküls hauptsächlich unterschiedliche aldehydische Gruppen (nicht aromatischen und aromatischen Charakters) sowie heterocyclische und andere Carbonyl-Gruppen befinden. Diese Gruppen reduzieren Chrom (VI)-Anteile. Bei der nach den erwähnten Patenten erzeugten Lignosulfosäure sind die bezeichneten Gruppen an der Moleküloberfläche angeordnet und damit zur Chromatreduktion wirksam.

Das Lignosulfosäuresystem (LSS) ist ein vorzüglicher Dispergator und verteilt sich deshalb besonders gut in der Zementmatrix. Deshalb werden alle Chromationen erreicht und aufgrund der Molekularmassenverteilung und der hohen Anzahl reduzierender Gruppen in einem Makromolekül die Chrom (VI)-Ionen fast vollständig reduziert. Wie aus den genannten Patenten bekannt, sind die LSS-Produkte reproduzierbar.

Durch Untersuchungen wurde festgestellt, daß weder Eisen (II)-Verbindungen, noch Produkte auf Ligninsulfonatbasis oder andere bekannte Verbindungen den wasserlöslichen Gehalt von Cr (VI)-Ionen in der Zementmatrix auf einen geforderten Wert kleiner 2 ppm reduzieren können.

Durch Sn (II)-Ionen ist es aber möglich, den Gehalt an wasserlöslichem Chromat in der Zementmatrix nachhaltig zu verringern und damit die Chromatwerte deutlich unter die 2 ppm-Grenze abzusenken.

Zinn II stellt ein starkes Reduktionsmittel dar, weil es das Bestreben hat, in seine vierwertige Stufe überzugehen:

$$Sn^{2+} \rightarrow Sn^{4+} + 2e^-$$

Weiterhin bildet Zinn-II in stark basischer Lösung ein amphoteres Zinn-II-hydroxid, das auch bei sehr hohen pH-Werten seine Mobilität nicht einbüßt. Deshalb wird das Chrom VI zu Chrom III vollständig reduziert:

$$2 Cr^{6+} + 3 Sn^{2+} \rightarrow 2 Cr^{3+} + 3 Sn^{4+}$$

Tabelle:

1 % Fe (II) reduziert den Chromatgehalt auf 7,3 ppm
= Reduktionswirkung: 32 %
1 % Sn (II) reduziert den Chromatgehalt auf 1,7 ppm
= Reduktonswirkung: 84 %

Durch den Einsatz der Lignosutfosäure (LSS) können zusätzliche synergistische Effekte bei der Chromatreduzierung in Zusammenhang mit Sn (11)-Ionen in der Zementmatrix erzielt werden. Hierdurch werden die reduzierenden Eigenschaften des Sn (II) wesentlich verbessert. Die Verbindung Zinnlignosulfosäure reduziert den wasserlöslichen Cr (VI)-Gehalt in der Zementmatrix auf 0 ppm. Weiterhin wird der durch die Chromatredukton erzeugte Cr (111)-Gehalt im Gegensatz zu Fe (II) und deren Verbindungen über einen langen Zeitraum stabil gehalten.

Tabelle:

Prüfzement mit 10,7 % wasserlöslichem Chromat (Cr VI)

Dosierung 0,5 % auf Zement

Fe II LSS reduziert den Chromatgehalt auf 5,8 ppm
= Reduktionswirkung: 46 %
Sn II LSS reduziert den Chromatgehalt auf 0,0 ppm
= Reduktionswirkung: 100%

Standardrezeptur:

1,6% Sn lt-Ionen
98,4 % Lignosulfosäure (LSS)

**Patentansprüche**

1. Mittel zum Reduzieren von Chrom (VI)-Ionen in Zement, dadurch ge**gekennzeichnet**, dass es aus mindestens 0,2 % Sn (II)-Ionen und aus höchstens 99,8 % Lignosulfosäure (LSS), dem anodischen Endprodukt eines elektrochemischen Membranverfahrens zur Entfernung der kationogenen Komponenten aus Ligninsulfonat enthaltender Zellstoffablauge, besteht.

2. Mittel nach Anspruch 1, **dadurch gekennzeichnet, dass** es aus 1 bis 3 % Sn (II)-Ionen und zu Rest auf 100 % Lignosulfosäure (LSS) besteht.

3. Mittel nach Anspruch 1 oder 2, **dadurch gekennzeichnet, dass** es aus 1,6 % Sn (II)-Ionen und aus 98,4 % Lignosulfosäure (LSS) besteht.

**Claims**

1. An agent for reducing chromium (VI) ions in cement, **characterised in that** it comprises at least 0.2 % Sn (II) ions and of at most 99.8 % lignosulphonic acid (LSA), the anodic end product of an electrochemical membrane process for removing the cationic components of pulp waste liquor containing lignosulphonate.

2. An agent according to Claim 1, **characterised in that** it consists of 1 to 3 % Sn (II) ions and the remainder up to 100 % lignosulphonic acid (LSA).

3. An agent according to Claim 1 or 2, **characterised in that** it consists of 1.6 % Sn (II) ions and of 98.4 % lignosulphonic acid (LSA).

**Revendications**

1. Produit pour réduire les ions chrome (VI) dans le ciment, **caractérisé en ce qu'**il comprend au moins 0,2 % d'ions Sn (II) et au plus 99,8 % d'acide lignosulfonique (ALS), le produit final anodique d'un procédé membranaire électrochimique pour l'élimination des composés générateurs de cations à partir de lessive résiduaire cellulosique contenant de la liqueur de lignine.

2. Produit selon la revendication 1, **caractérisé en ce qu'**il comprend 1 à 3 % d'ions Sn (II) et le complément à 1 % d'acide lignosulfonique CALS).

3. Produit selon l'une quelconque des revendications 1 à 2, **caractérisé en ce qu'**il comprend 1,6 % d'ions Sn (II) et 98,4 % d'acide lignosulfonique (ALS).